# FASCICULE DE BREVET EUROPEEN

(11) **EP 3 335 094 B1**
(45) Date de publication et mention de la délivrance du brevet: **09.02.2022**
(21) Numéro de dépôt: 16742273.2
(22) Date de dépôt: 21.07.2016
(51) Int. Cl.: H04N 21/422, H04N 21/45, G06F 3/00, H04N 5/44

(54) **PROCÉDÉ DE PARAMÉTRAGE DE LA RÉACTIVITÉ D'UN DISPOSITIF ÉLECTRONIQUE OBSERVÉE SUITE À LA RÉCEPTION D'UNE COMMANDE ÉMISE DEPUIS UN ÉQUIPEMENT DE CONTRÔLE VOISIN ET DISPOSITIF ADAPTÉ POUR LA MISE EN OEUVRE D'UN TEL PROCÉDÉ**
VERFAHREN ZUM PARAMETRISIERUNG DER REAKTIONSFÄHIGKEIT EINER BEOBACHTETEN ELEKTRONISCHEN VORRICHTUNG NACH DEM EMPFANG EINES BEFEHLS VON EINEM NAHEN TESTSYSTEM UND ZUR UMSETZUNG SOLCH EINES VERFAHRENS NÜTZLICHE VORRICHTUNG
METHOD FOR PARAMETERISING THE RESPONSIVENESS OF AN ELECTRONIC DEVICE OBSERVED AFTER RECEIVING A COMMAND EMITTED BY A NEARBY TESTING SYSTEM AND DEVICE SUITABLE FOR IMPLEMENTING SUCH A METHOD

(30) Priorité: 10.08.2015 FR 1557653
(43) Date de publication de la demande: 20.06.2018
(73) Titulaire: Sagemcom Broadband SAS, 92500 Rueil-Malmaison (FR)
(72) Inventeur: BENAMROUCHE, Farid, 92700 Colombes (FR)
(74) Mandataire: Cabinet Camus Lebkiri
(86) Numéro de dépôt international: PCT/EP2016/067376
(87) Numéro de publication internationale: WO 2017/025290

(56) Documents cités:
- US-A1- 2008 246 634
- US-A1- 2012 281 143
- US-B1- 6 452 617

## Description

### DOMAINE TECHNIQUE DE L'INVENTION

La présente invention a pour objet un procédé de paramétrage de la réactivité d'un dispositif électronique, réactivité observée, constatée, suite à la réception d'une commande émise depuis un équipement de contrôle voisin, par exemple depuis une télécommande. L'invention se rapporte également à un dispositif électronique apte à mettre en oeuvre un tel procédé de paramétrage de la réactivité d'un dispositif électronique.

Le domaine de l'invention est, d'une façon générale, celui des dispositifs électroniques commandés par un équipement électronique voisin, typiquement une télécommande. Par équipement électronique voisin, on désigne, pour un dispositif électronique donné, un équipement électronique qui est utilisé pour transmettre des commandes depuis l'équipement vers le dispositif électronique, l'utilisateur de l'équipement étant situé à une distance limitée du dispositif électronique de sorte qu'il peut constater directement, par sa vision ou son ouïe et sans intervention de moyens de transmission, sur le dispositif électronique considéré la prise en compte des commandes qu'il passe au moyen de l'équipement de contrôle voisin.

Les équipements voisins considérés sont des équipements qui permettent de passer des commandes au dispositif électronique qui lui est associé au moyen de touches de commandes, lesdites touches de commande pouvant par exemple être des boutons de commande dont la pression par l'utilisateur entraine l'émission d'une commande, ou bien des boutons - ou touches - de type tactiles. Il peut s'agir notamment de télécommandes de dispositifs audio/vidéo, mais aussi de smartphones équipés d'applications spécifiques pour le contrôle de tels dispositifs.

L'objectif de l'invention est d'améliorer le confort d'utilisation d'un équipement électronique, notamment de type télécommande, en s'adaptant aux habitudes d'usage d'un utilisateur la réactivité d'un dispositif électronique commandé par l'équipement électronique considéré.

### ARRIERE-PLAN TECHNOLOGIQUE DE L'INVENTION

Dans l'état de la technique, on connait différents systèmes qui proposent des procédés d'adaptation à l'utilisateur d'équipements électroniques commandant des dispositifs électroniques voisins.

On connait par exemple un procédé permettant de repérer une combinaison de touches qu'un utilisateur reproduit souvent sur sa télécommande ; on propose alors à l'utilisateur l'utilisation d'une touche spécifique de sa télécommande servant de raccourci à cette combinaison de touches. On remplace ainsi une combinaison de touches fastidieuses à réaliser par un simple appui sur une unique touche.

En revanche, dans l'état de la technique, on ne connait pas de procédés permettant de prendre en considération des habitudes d'un utilisateur dans l'usage d'un équipement électronique de contrôle, typiquement une télécommande, d'un dispositif électronique pour rendre l'utilisation de l'équipement confortable, efficace, dans le passage de commandes.

Il est ainsi fréquent qu'un utilisateur de télécommande appuyant successivement sur différentes touches d'un équipement de commande, ou bien même sur une unique touche à plusieurs reprises, constate que certains appuis sur les touches considérées ne sont pas pris en compte par le dispositif électronique associé à l'équipement de commande. Il doit alors de nouveau appuyer sur ces mêmes touches, éventuellement après avoir corrigé les commandes effectivement prises en compte mais pas dans le bon ordre, pour que les commandes qu'il souhaitait passer soit effectivement prises en compte par le dispositif électronique.

Ainsi, par exemple, un utilisateur souhaitant sélectionner, au moyen de sa télécommande, le canal 1146 sur son décodeur de télévision numérique, appuiera successivement sur les touches 1, 1, 4 et 6. Si cette séquence est composée trop rapidement, seules les commandes 1, 4 et 6 seront prises en considération. Le deuxième "1" n'aura pas été pris en compte par le décodeur de télévision numérique. L'explication de cette non prise en compte réside dans le système d'anti-rebond mis en places dans de tels dispositifs : le système d'anti-rebond filtre la réception de certaines commandes lorsque celles-ci sont émises trop proches les unes des autres. Ainsi, par exemple, deux appuis successifs sur la touche "1" espacés d'un intervalle de temps inférieur à 150 millisecondes (durée de l'anti-rebond cet exemple) aura pour conséquence la non prise en compte de la deuxième commande "1" par le dispositif électronique.

Il en est de même lors d'un appui en continu sur une touche de commande de l'équipement de type télécommande, un appui en continu étant interprété par le dispositif électronique recevant la commande comme une succession de commandes identiques reçues, en principe avec des intervalles de temps réguliers, lesdits intervalles de temps réguliers espacés d'une durée inférieure à la valeur de l'anti-rebond.

Un autre exemple d'utilisation insatisfaisant d'un équipement de contrôle est à présent décrit : un utilisateur qui utilise sa télécommande d'une manière peu énergique a tendance à demeurer appuyé un certain temps sur chaque touche de commande de sa télécommande. Certains appuis sur des touches de la télécommande peuvent ainsi être interprétés par le dispositif électronique comme plusieurs appuis successifs, notamment si la durée de l'anti-rebond est relativement long. L'utilisateur devra alors régulièrement corriger les commandes reçues de manière répétée par le dispositif électronique, alors que cette répétition de commande ne correspondait pas à sa volonté.

De la même manière, certains équipements de contrôle présentent des touches de commande qui prennent en considération une intensité d'appui sur la touche considérée ; l'intensité d'appui constitue une information qui a une incidence sur l"opération de commande reçu, notamment en convertissant cette intensité d'appui en un nombre préalablement déterminé de commandes identiques reçues par le dispositif électronique : puis l'intensité de l'appui sur la touche de commande "augmentation de volume" est important, plus l'augmentation du volume devra se faire de manière rapide au sein du dispositif électronique ; tout se passe comme si ledit dispositif recevait la commande d'instruction d'augmentation de volume un nombre de fois augmentant dans le même sens que l'augmentation de l'intensité d'appui.

Le réglage d'un tel système sensible à l'intensité d'appui sur une touche de contrôle ne correspond parfois pas à l'utilisation des utilisateurs, certains appuyant naturellement fort sur des touches de commande, et d'autres moins fort. Aucun système de l'état de la technique ne prévoit la prise en compte de telles spécificités d'utilisation.

Le document US 6452617 intitulé « Adjusting a click time threshold for a graphical user interface » est connu de l'état de la technique.

### DESCRIPTION GENERALE DE L'INVENTION

Le procédé selon l'invention propose une solution aux problèmes et inconvénients qui viennent d'être exposés. Dans l'invention, on propose une solution pour adapter la réactivité d'un dispositif électronique recevant des commandes depuis un équipement de contrôle voisin en fonction de pratiques d'utilisation de cet équipement.

En outre, on prévoit dans l'invention de déterminer des informations quant à l'usage de l'équipement distant, sur l'utilisation des touches de commande, notamment relatives à une fréquence d'appui sur ces touches et/ou à une intensité d'appui afin de déterminer une valeur d'un paramètre de réactivité du dispositif électronique associé, notamment une valeur d'anti-rebond et/ou un paramètre dépendant directement d'une intensité d'appui sur au moins une touche de l'équipement de contrôle.

L'invention concerne donc essentiellement un procédé de paramétrage de la réactivité d'un dispositif électronique observée suite à la réception, par le dispositif électronique, d'une commande émise depuis un équipement de contrôle voisin comportant une pluralité de touches de commande conformément à la revendication 1, ledit procédé étant caractérisé en ce qu'il comporte les différentes étapes consistant à :
- établir un profil d'utilisation de l'équipement de contrôle voisin par une opération d'analyse d'opérations d'appui sur les touches de commande dudit équipement de contrôle voisin ;
- adapter un paramètre de réactivité du dispositif électronique en fonction du profil d'utilisation établi, le paramètre de réactivité étant une durée d'anti-rebond, ou un paramètre dont la valeur est corrélée à l'intensité d'appui sur une touche de commande considérée de l'équipement de contrôle voisin.

Le procédé selon l'invention peut comporter, en plus des étapes principales qui viennent d'être mentionnées dans le paragraphe précédent, une ou plusieurs caractéristiques supplémentaires parmi les suivantes:
- le paramètre de réactivité étant la durée d'anti-rebond associée à un système d'anti-rebond, ladite durée d'anti-rebond étant affectée à un ensemble de touches parmi la pluralité de touches de commande de l'équipement de contrôle voisin.
- l'étape d'établissement d'un profil d'utilisation comporte l'opération consistant à détecter une première séquence consistant en un appui sur une touche de commande considérée immédiatement suivi d'un appui d'annulation de la dite commande - l'étape d'adaptation du paramètre de réactivité consistant alors à modifier, en l'augmentant, la durée de l'anti-rebond pour au moins une des touches de commande considérées de la première séquence.
- l'appui sur la touche d'annulation est répété trois fois consécutivement avant de procéder à l'étape d'adaptation du paramètre de réactivité.
- l'étape d'établissement d'un profil d'utilisation comporte les opérations consistant à détecter : - une deuxième séquence consistant en un appui prolongé sur une touche de commande considérée ou à des appuis successifs sur la touche de commande considérée ; une opération de suppression par le système anti-rebond, d'au moins une impulsion provoquée par ledit appui prolongé ou par lesdits appuis successifs sur la touche de commande considérée; - un nouvel appui sur la touche de commande considérée provoquant une impulsion non supprimée par le système anti-rebond, ledit nouvel appui intervenant sans qu'un autre appui sur une autre touche que la touche considérée ne soit intervenu depuis l'opération de suppression; - l'étape d'adaptation du paramètre de réactivité consistant alors à modifier, en la diminuant, la durée de l'anti-rebond pour au moins la touche de commande considérée.
- le nombre d'impulsions supprimées par le système anti-rebond est supérieur ou égal à trois.
- l'adaptation du paramètre de réactivité consiste en une modification de la durée d'anti-rebond pour une pluralité de touches de commandes associées par le système anti-rebond à chaque touche de commande considérée.
- la modification de la durée d'anti-rebond consiste en une modification par palier, chaque palier étant compris entre dix et vingt-cinq millisecondes.
- la durée de l'anti-rebond à appliquer à au moins une touche de commande considérée est adaptée en fonction de mesures établies entre des pressions consécutives entre différentes touches de commande à laquelle appartient ladite touche de commande considérée.
- le paramètre de réactivité étant le paramètre dont la valeur est corrélée à l'intensité d'appui sur une touche de commande considérée de l'équipement de contrôle voisin, ladite valeur donnant un nombre de répétitions de la commande associée à la touche de commande considérée à appliquer dans le dispositif électronique lorsque ladite touche de commande considérée est appuyée.
   l'étape d'établissement d'un profil d'utilisation comporte l'opération consistant à détecter une troisième séquence consistant en un appui sur une touche de commande considérée immédiatement suivi d'un appui sur une touche d'annulation de la dite commande ; - l'étape d'adaptation du paramètre de réactivité consistant alors à modifier, en la diminuant, pour une intensité d'appui donnée sur la touche de commande considérée, le nombre de répétitions de ladite commande à appliquer dans le dispositif électronique lorsque ladite touche de commande considérée est appuyée.
- l'appui sur la touche d'annulation est répété trois fois consécutivement avant de procéder à l'étape d'adaptation du paramètre de réactivité.
- l'étape d'établissement d'un profil d'utilisation comporte l'opération consistant à détecter une quatrième séquence consistant en un appui prolongé sur une touche de commande considérée, suivi d'un nouvel appui sur ladite touche de commande considérée ; - l'étape d'adaptation du paramètre de réactivité consistant alors à modifier, en l'augmentant, pour une intensité d'appui donnée sur la touche de commande considérée, le nombre de répétitions de ladite commande à appliquer dans le dispositif électronique lorsque ladite touche de commande considérée est appuyée.

Les différentes caractéristiques supplémentaires du procédé selon l'invention, dans la mesure où elles ne s'excluent pas mutuellement, sont combinées selon toutes les possibilités d'association pour aboutir à différents exemples de mise en œuvre de l'invention.

La présente invention se rapporte également à un dispositif électronique adapté pour la mise en oeuvre du procédé selon l'invention, de paramétrage de la réactivité dudit dispositif électronique observée suite à la réception, par le dispositif électronique, d'une commande émise depuis un équipement de contrôle voisin comportant une pluralité de touches de commande conformément à la revendication 14, ledit dispositif comportant
- des moyens d'établissement d'un profil d'utilisation de l'équipement de contrôle voisin par une opération d'analyse d'opérations d'appui sur les touches de commande dudit équipement de contrôle voisin ;
- des moyens d'adaptation d'un paramètre de réactivité du dispositif électronique en fonction du profil d'utilisation établi. Le dispositif selon l'invention est avantageusement un décodeur de télévision numérique.

L'invention et ses différentes applications seront mieux comprises à la lecture de la description qui suit et à l'examen des figures qui l'accompagnent.

### BREVE DESCRIPTION DES FIGURES

Celles-ci ne sont présentées qu'à titre indicatif et nullement limitatif de l'invention. Les figures montrent :
- à la figure 1, une représentation schématique du dispositif selon l'invention, dans un contexte de mise en œuvre du procédé selon l'invention ;
- à la figure 2, un schéma fonctionnel illustrant un premier exemple de mise en œuvre du procédé selon l'invention ;
- à la figure 3, un schéma fonctionnel illustrant un deuxième exemple de mise en œuvre du procédé selon l'invention ;
- à la figure 4, un schéma fonctionnel illustrant un troisième exemple de mise en œuvre du procédé selon l'invention ;
- à la figure 5, un schéma fonctionnel illustrant un quatrième exemple de mise en œuvre du procédé selon l'invention.

### DESCRIPTION DES FORMES DE REALISATION PREFEREES DE L'INVENTION

Les différents éléments apparaissant sur plusieurs figures auront gardé, sauf précision contraire, la même référence.

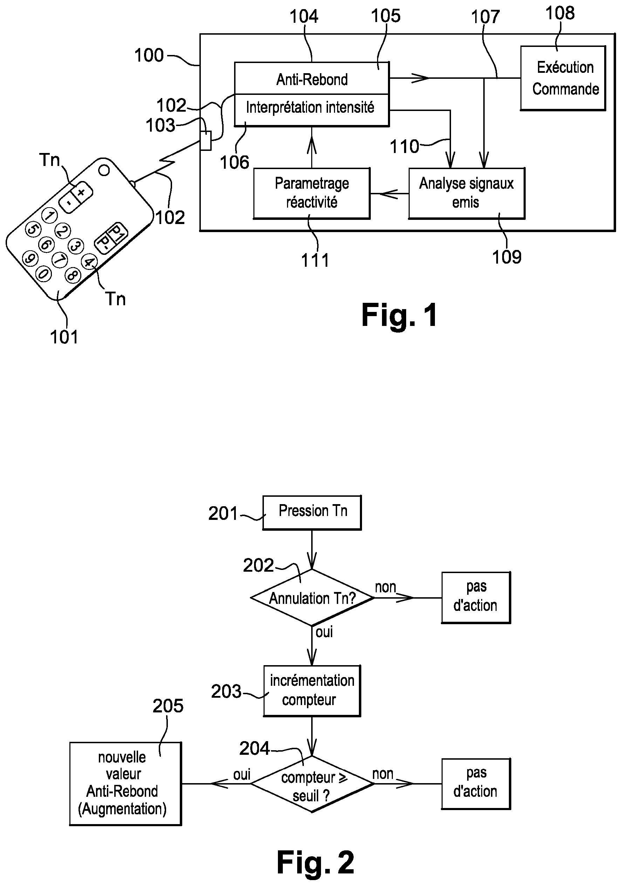

Sur la figure 1, on a représenté un dispositif électronique 100 selon un exemple de réalisation de l'invention. Le dispositif électronique 100 est typiquement un équipement audio-vidéo, ou un périphérique de ce type d'équipement. Dans des exemples d'application avantageux de l'invention, le dispositif 100 est un décodeur de télévision numérique, ou bien un téléviseur.

Le dispositif électronique 100 reçoit des commandes depuis un équipement de contrôle voisin 101. L'équipement de contrôle voisin 101 est par exemple une télécommande, ou bien un dispositif sur lequel est installée une application pour l'émission de commandes de contrôle du dispositif électronique 100. L'équipement de contrôle voisin 101 comporte des touches de commandes Tn qui sont par exemple soit des boutons sur lesquels il faut exercer une pression pour émettre une commande associée, soit des touches tactiles dans le cas où l'équipement 101 comporte un écran tactile.

Chaque appui sur une touche de commande Tn se traduit par l'émission vers le dispositif 100, par exemple sous la forme d'un signal Infrarouge 102, d'une commande à exécuter par ledit dispositif 100. Ce dernier présente à cet effet un ou plusieurs récepteurs appropriés 103.

Les signaux de commande 102 reçus par le dispositif électronique 100 sont traités, au sein du dispositif 100, par un module 104 dit module de gestion de la réactivité. Le module 104 de gestion de la réactivité comporte au moins une fonctionnalité parmi les systèmes suivants :
- un système anti-rebond 105. Le système anti-rebond 105 assure l'élimination de commandes reçues par ledit module qui présenteraient, avec la commande immédiatement précédente, un écart temporel trop faible. Pour deux impulsions consécutives pour lesquelles l'écart temporel est inférieur à une valeur préalablement déterminée, dite valeur d'anti-rebond, la deuxième impulsion ne sera pas exécutée par le dispositif 100. Par exemple, pour un utilisateur appuyant à cinq reprises sur la touche T1 de l'équipement 101, seuls trois appuis seront effectivement pris en compte et exécutés par le dispositif 100 si deux des appuis sont réalisés trop proches d'appuis précédents. Le système anti-rebond 105 est donc susceptible de supprimer certaines impulsions de commande ; il mémorise une information relative à ces commandes supprimées.
- un système dit d'interprétation d'intensité 106. Le système 106 assure la conversion entre l'intensité d'un appui exercé par l'utilisateur sur une touche Tn de l'équipement 101 et un nombre de commandes associées à ladite touche Tn à prendre en considération par le dispositif 100. Ainsi, plus un utilisateur presse une des touches Tn fort, plus le nombre de commandes correspondant à la touche Tn pris en compte par le dispositif 100 est important.

Le module de gestion de la réactivité 104 laisse ainsi transiter des signaux traités 107, filtrés par le système anti-rebond ou bien convertis en un certain nombre d'impulsions par le système 106, qui sont communiqués à un module 108 d'exécution des signaux de commande. Le module 108 gère la prise en compte par le dispositif 100 de ces signaux traités 107 reçus et assure l'interprétation, notamment l'interprétation et l'exécution des commandes correspondantes.

Dans le même temps les signaux traités 107 sont transmis, au sein du dispositif 100, à un module 109 dit module d'analyse des signaux émis par l'équipement voisin 101 ; le module 109 reçoit également des informations de traitement 110 communiquées par le module de gestion de la réactivité 104. Dans le cas où le système anti-rebond est utilisé dans le module de gestion de la réactivité 104, les informations de traitement 110 indiquent par exemple le nombre d'impulsions, correspondant à des appuis sur l'équipement 101, qui ont été supprimées - ainsi que les impulsions non supprimées.

Le module 109 procède alors à une analyse des signaux traités 107 et des informations de traitement 110 pour déterminer un paramétrage 111 du module de gestion de la réactivité 104. Le paramétrage 111 effectué permet l'établissement d'un profil d'utilisation de l'équipement 101 et détermine des ajustements à apportés à la réactivité assurée notamment par le système anti-rebond 105 et le système d'interprétation de l'intensité 106 dans un but de rendre l'utilisation de l'équipement 101 plus confortable pour l'utilisateur. Il permet par exemple de limiter le nombre de correction, ou de répétions, inutiles que l'utilisateur va exercer sur son équipement de contrôle 101.

Les informations de paramétrage 111 ainsi établies sont transmises au module de gestion de la réactivité 104 pour leur prise en compte dans les différents systèmes que le module 104 met en œuvre.

Différents exemples du procédé général selon l'invention qui vient d'être décrits sont à présents illustrés au moyen des figures 2 à 5. Sur ces figures ,on s'intéresse plus particulièrement aux opérations effectuées par le module 109 des signaux émis par l'équipement voisin 101, module 109 qui reçoit en entrée les signaux traités 107 et les informations de traitement 110.

Sur la figure 2, on considère que le module 104 de gestion de la réactivité met en œuvre le système anti-rebond 105. Dans cet exemple, on détecte, dans une première étape 201, une première pression d'une touche Tn de l'équipement 101.

Dans une étape suivante 202, on détecte si la pression de la touche Tn, prolongée ou bien répétée plusieurs fois, est immédiatement suivie d'un appui sur une touche d'annulation de la touche Tn. Si ce n'est pas le cas, aucune action n'est entreprise. Les termes "immédiatement suivie" désignent le fait que il n'y a eu aucun appui sur une autre touche qui se serait intercalé entre la pression sur la touche Tn et la pression sur la touche d'annulation de la touche Tn. Une touche d'annulation est une touche qui permet de faire en sorte que le dispositif électronique 100 ne prenne pas en compte l'appui précédent sur la touche Tn. Par exemple, la touche d'augmentation du volume sonore a pour touche d'annulation celle de diminution du volume sonore. Une touche alphanumérique a pour touche d'annulation la touche "correction" de l'équipement 101.

Si la pression de la touche Tn est effectivement immédiatement suivie par un appui sur la touche d'annulation, on dénombre, en incrémentant un compteur dans une étape 203, le nombre de commandes d'annulation alors reçues pour annuler la pression sur la touche Tn. Le compteur est remis à zéro dès l'appui sur une autre touche que la touche d'annulation de la touche Tn.

Dans une étape suivante 204, on compare le nombre de commandes d'annulation du compteur précédent à une valeur seuil préalablement déterminée. Ce nombre est supérieur ou égal à 1. Si la valeur seuil n'est pas atteinte, aucune action n'est entreprise. Dans cet exemple, si cette valeur est supérieure ou égale à 3, on en déduit que l'anti-rebond est mal réglé et qu'il est nécessaire d'augmenter la valeur de l'anti-rebond. Ainsi, lors d'un appui multiple ou prolongé sur la touche Tn, un nombre supérieur d'impulsions seront supprimées, et l'utilisateur n'aura plus - ou moins - recours à la touche d'annulation de la touche Tn. On détermine alors, dans une étape 205, la nouvelle valeur de l'anti-rebond à adopter, par exemple en décidant d'appliquer une augmentation par palier de cette valeur, chaque palier ayant une valeur de 25 millisecondes, tout en s'assurant que la valeur de l'anti-rebond n'excède pas une valeur limite, par exemple 200 millisecondes. Une commande d'incrémentation de la valeur de l'anti-rebond est alors communiquée au module 104 de gestion de la réactivité.

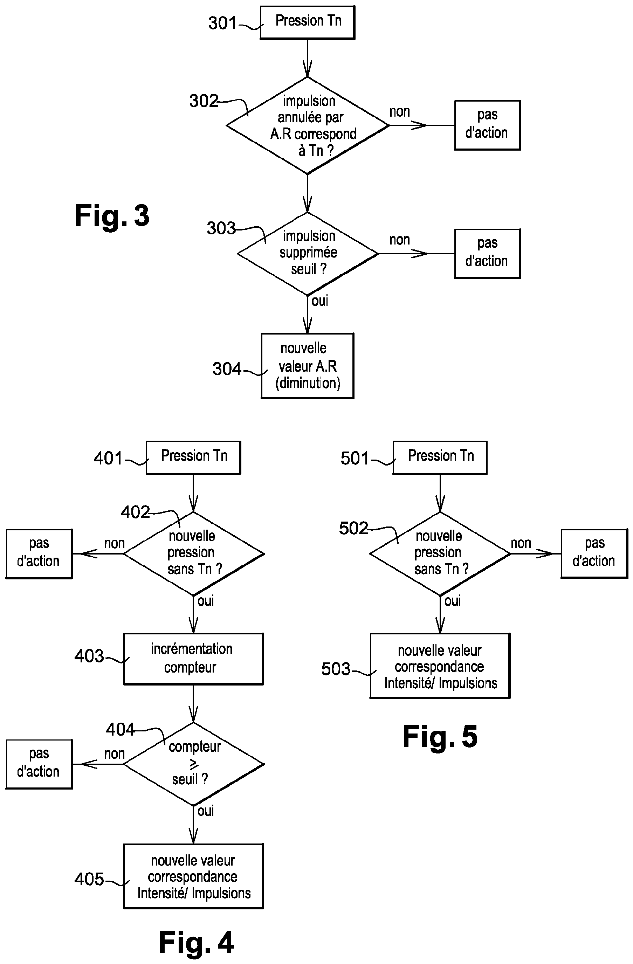

Sur la figure 3, on considère que le module 104 de gestion de la réactivité met en œuvre le système anti-rebond 105. Dans cet exemple, on détecte, dans une première étape 301, une première pression répétée ou prolongée d'une touche Tn de l'équipement 101.

Dans une étape suivante 302, on détecte si la dernière impulsion supprimée par le système anti-rebond était une impulsion correspondant à un appui sur la touche Tn considérée. Si ce n'est pas le cas, aucune action n'est entreprise. Dans l'affirmative, si la dernière impulsion supprimée par le système anti-rebond était une impulsion correspondant à un appui sur la touche Tn considérée, on compare, dans une étape suivante 303 le nombre d'impulsions supprimées immédiatement avant l'appui sur la touche Tn, à une valeur seuil préalablement déterminée. Ce nombre est supérieur ou égal à 1. Si la valeur seuil n'est pas atteinte, aucune action n'est entreprise. Dans cet exemple, si cette valeur est supérieure ou égale à 3, on en déduit que l'anti-rebond est mal réglé et qu'il est nécessaire de diminuer la valeur de l'anti-rebond. Ainsi, lors d'un appui multiple ou prolongé sur la touche Tn, moins d'impulsions - voire aucune - seront supprimées, et l'utilisateur n'aura plus à appuyer de nouveau sur la touche Tn pour la prise en compte du nombre exact de commandes associées à la touche Tn qu'il souhaite voir exécuter.

On détermine alors, dans une étape 304, la nouvelle valeur de l'anti-rebond à adopter, par exemple en décidant d'appliquer une diminution par palier de cette valeur, chaque palier ayant une valeur de 25 millisecondes, tout en s'assurant que la valeur de l'anti-rebond ne tombe pas sous une valeur limite, par exemple 40 millisecondes. Une commande de décrémentation de la valeur de l'anti-rebond est alors communiquée au module 104 de gestion de la réactivité.

La modification de la valeur d'anti-rebond, lorsqu'elle est amenée à être modifiée par le procédé selon l'invention, s'applique à la touche Tn considérée qui a entraîner le déclenchement de cette adaptation, et avantageusement à un ensemble de touches de l'équipement 101, ensemble auquel appartient la touche Tn considérée. Cet ensemble est par exemple constitué de touches disposées dans une même zone de la surface de l'équipement, ou bien de touches associées à des commandes similaires (commandes dédiées au changement du volume, touches alphanumériques...).

Sur les figures 4 et 5, on considère que le module 104 de gestion de la réactivité met en œuvre le système dit d'interprétation d'intensité 106.

Dans l'exemple illustré à la figure 4, on détecte, dans une première étape 401, une première pression d'une touche Tn de l'équipement 101 avec une intensité donnée.

Dans une étape suivante 402, on détecte si la pression de la touche Tn est immédiatement suivie d'un appui sur une touche d'annulation de la touche Tn. Si ce n'est pas le cas, aucune action n'est entreprise.

Si la pression de la touche Tn est effectivement immédiatement suivie par un appui sur la touche d'annulation, on dénombre, en incrémentant un compteur dans une étape 403, le nombre de commandes d'annulation alors reçues pour annuler la pression sur la touche Tn. Le compteur est remis à zéro dès l'appui sur une autre touche que la touche d'annulation de la touche Tn.

Dans une étape suivante 404, on compare le nombre de commandes d'annulation du compteur précédent à une valeur seuil préalablement déterminée. Ce nombre est supérieur ou égal à 1. Si la valeur seuil n'est pas atteinte, aucune action n'est entreprise. Dans cet exemple, si cette valeur est supérieure ou égale à 3, on en déduit que le système d'interprétation d'intensité 106 est mal réglé qu'il est nécessaire de diminuer, pour une intensité d'appui donnée sur la touche de commande considérée, le nombre de répétitions de ladite commande à appliquer dans le dispositif électronique 100 lorsque ladite touche de commande Tn considérée est appuyée.

On détermine alors, dans une étape 405, la nouvelle valeur de correspondance entre une intensité d'appui donné et le nombre de répétition de commandes à considérer pour cette intensité, Une commande correspondante de diminution est alors communiquée au module 104 de gestion de la réactivité.

Dans l'exemple illustré à la figure 5, cet exemple, on détecte, dans une première étape 301, une première pression prolongée d'une touche Tn de l'équipement 101.

Dans une étape suivante 502, on détecte si la pression suivante sur une touche est de nouveau une pression sur la touche Tn. Dans la négative, aucune action n'est entreprise. Dans l'affirmative on en déduit que le système d'interprétation d'intensité 106 est mal réglé qu'il est nécessaire de d'augmenter, pour une intensité d'appui donnée sur la touche de commande considérée, le nombre de répétitions de ladite commande à appliquer dans le dispositif électronique 100 lorsque ladite touche de commande Tn considérée est appuyée.

On détermine alors, dans une étape 503, l'augmentation à appliquer. Une commande adaptée est alors communiquée au module 104 de gestion de la réactivité.

## Revendications

1. Procédé de paramétrage de la réactivité d'un dispositif électronique (100) observée suite à la réception, par le dispositif électronique (100), d'une commande émise depuis un équipement de contrôle (101) voisin comportant une pluralité de touches de commande, ledit procédé comportant les différentes étapes consistant à :
- établir un profil d'utilisation de l'équipement de contrôle (101) voisin par une opération (109) d'analyse d'opérations d'appui sur les touches de commande dudit équipement de contrôle (101) voisin ;
- adapter (110) un paramètre de réactivité du dispositif électronique (100) en fonction du profil d'utilisation établi ;
le procédé étant **caractérisé en ce que** le paramètre de réactivité est une durée d'anti-rebond, ou un paramètre dont la valeur est corrélée à l'intensité d'appui sur une touche (Tn) de commande considérée de l'équipement de contrôle (101) voisin.

2. Procédé selon la revendication précédente **caractérisé en ce que** la durée d'anti-rebond est associée à un système d'anti-rebond (105) ladite durée d'anti-rebond étant affectée à un ensemble de touches parmi la pluralité de touches de commande de l'équipement de contrôle (101) voisin.

3. Procédé selon la revendication précédente **caractérisé en ce que** :
- l'étape d'établissement d'un profil d'utilisation comporte l'opération consistant à détecter (202) une séquence consistant en un appui sur une touche (Tn) de commande considérée immédiatement suivi d'un appui d'annulation de la dite commande ;
- l'étape d'adaptation (110) du paramètre de réactivité consistant alors à modifier, en l'augmentant (205), la durée de l'anti-rebond pour au moins une des touches (Tn) de commande considérées de la première séquence.

4. Procédé selon la revendication précédente **caractérisé en ce que** l'appui sur la touche d'annulation est répété trois fois consécutivement avant de procéder à l'étape d'adaptation (110) du paramètre de réactivité.

5. Procédé selon l'une quelconque des revendications 2 à 4 **caractérisé en ce que** :
- l'étape d'établissement d'un profil d'utilisation comporte les opérations consistant à détecter :
- une séquence consistant en un appui prolongé sur une touche (Tn) de commande considérée ou à des appuis successifs sur la touche (Tn) de commande considérée ;
- une opération de suppression par le système anti-rebond (105), d'au moins une impulsion provoquée par ledit appui prolongé ou par lesdits appuis successifs sur la touche (Tn) de commande considérée;
- un nouvel appui (302) sur la touche (Tn) de commande considérée provoquant une impulsion non supprimée par le système anti-rebond (105), ledit nouvel appui intervenant sans qu'un autre appui sur une autre touche que la touche (Tn) considérée ne soit intervenu depuis l'opération de suppression;
- l'étape d'adaptation du paramètre de réactivité consistant alors à modifier, en la diminuant (304), la durée de l'anti-rebond pour au moins la touche (Tn) de commande considérée.

6. Procédé selon la revendication précédente **caractérisé en ce que** le nombre d'impulsions supprimées par le système anti-rebond (105) est supérieur ou égal à trois.

7. Procédé selon l'une quelconque des revendications 2 à 6 **caractérisé en ce que** l'adaptation (110) du paramètre de réactivité consiste en une modification de la durée d'anti-rebond pour une pluralité de touches de commandes associées par le système anti-rebond à chaque touche (Tn) de commande considérée.

8. Procédé selon l'une quelconque des revendications 2 à 7 **caractérisé en ce que** la modification de la durée d'anti-rebond consiste en une modification par palier, chaque palier étant compris entre dix et vingt-cinq millisecondes.

9. Procédé selon l'une quelconque des revendications 2 à 8 **caractérisé en ce que** la durée de l'anti-rebond à appliquer à au moins une touche (Tn) de commande considérée est adaptée en fonction de mesures établies entre des pressions consécutives entre différentes touches de commande à laquelle appartient ladite touche (Tn) de commande considérée.

10. Procédé selon la revendication 1 **caractérisé en ce que**, le paramètre de réactivité étant le paramètre dont la valeur est corrélée à l'intensité d'appui sur une touche (Tn) de commande considérée de l'équipement de contrôle (101) voisin, ladite valeur donne un nombre de répétitions de la commande associée à la touche (Tn) de commande considérée à appliquer dans le dispositif électronique (100) lorsque ladite touche (Tn) de commande considérée est appuyée.

11. Procédé selon la revendication précédente **caractérisé en ce que** :
- l'étape d'établissement d'un profil d'utilisation comporte l'opération consistant à détecter une séquence consistant en un appui sur une touche (Tn) de commande considérée immédiatement suivi d'un appui sur une touche d'annulation de la dite commande ;
- l'étape d'adaptation du paramètre de réactivité consistant alors à modifier, en la diminuant, pour une intensité d'appui donnée sur la touche (Tn) de commande considérée, le nombre de répétitions de ladite commande à appliquer dans le dispositif électronique (100) lorsque ladite touche (Tn) de commande considérée est appuyée.

12. Procédé selon la revendication précédente **caractérisé en ce que** l'appui sur la touche d'annulation est répété trois fois consécutivement avant de procéder à l'étape d'adaptation du paramètre de réactivité.

13. Procédé selon l'une quelconque des revendications 10 à 12 **caractérisé en ce que** :
- l'étape d'établissement d'un profil d'utilisation comporte l'opération consistant à détecter une séquence consistant en un appui prolongé sur une touche (Tn) de commande considérée, suivi d'un nouvel appui sur ladite touche (Tn) de commande considérée.
- l'étape d'adaptation du paramètre de réactivité consistant alors à modifier, en l'augmentant, pour une intensité d'appui donnée sur la touche (Tn) de commande considérée, le nombre de répétitions de ladite commande à appliquer dans le dispositif électronique (100) lorsque ladite touche (Tn) de commande considérée est appuyée.

14. Dispositif électronique (100) adapté pour la mise en œuvre du procédé selon l'une quelconque des revendications précédentes, de paramétrage de la réactivité dudit dispositif électronique (100) observée suite à la réception, par le dispositif électronique (100), d'une commande émise depuis un équipement de contrôle (101) voisin comportant une pluralité de touches de commande, ledit dispositif comportant
- des moyens d'établissement d'un profil d'utilisation de l'équipement de contrôle (101) voisin par une opération d'analyse d'opérations d'appui sur les touches de commande dudit équipement de contrôle (101) voisin ;
- des moyens d'adaptation d'un paramètre de réactivité du dispositif électronique (100) en fonction du profil d'utilisation établi.

## Patentansprüche

1. Parametrierungsverfahren der Reaktivität einer elektronischen Vorrichtung (100), welche von der elektronischen Vorrichtung (100) im Anschluss an den Empfang eines Befehls festgestellt wurde, der von einer benachbarten Kontrollausrüstung (101) ausgegeben wurde, welche eine Vielzahl von Befehlstasten umfasst, wobei das genannte Verfahren die unterschiedlichen Schritte umfasst, bestehend aus:
- dem Aufbauen eines Nutzerprofils der benachbarten Kontrollausrüstung (101) durch eine Analyseoperation von Drückoperationen auf den Befehlstasten der genannten benachbarten Kontrollausrüstung (101),
- dem Anpassen (110) eines Reaktivitätsparameters der elektronischen Vorrichtung (100) in Abhängigkeit von dem aufgebauten Nutzerprofil,
wobei das Verfahren **dadurch gekennzeichnet ist, dass** der Reaktivitätsparameter eine Anti-Sprungzeit ist oder ein Parameter ist, dessen Wert mit der Intensität der Drückoperation auf einer betrachteten Befehlstaste (Tn) der benachbarten Kontrollausrüstung (101) korreliert ist.

2. Verfahren gemäß dem voranstehenden Anspruch, **dadurch gekennzeichnet, dass** die Anti-Rücksprungdauer einem Anti-Rücksprungsystem (105) zugeordnet ist, wobei die genannte Anti-Rücksprungdauer einer Gruppe von Tasten aus der Vielzahl von Befehlstasten der benachbarten Steuerausrüstung (101) zugeordnet ist.

3. Verfahren gemäß dem voranstehenden Anspruch, **dadurch gekennzeichnet, dass**:
- der Aufbauschritt eines Nutzungsprofils die Operation umfasst, die im Detektieren (202) einer Sequenz besteht, bestehend aus einem Drücken auf einer betrachteten Befehlstaste (Tn), auf das unmittelbar ein Löschdrücken des genannten Befehls folgt;
- Anpassungsschritt (110) des ersten Reaktivitätsparameters, der dann im Abändern der Anti-Rücksprungdauer durch deren Verlängern (205) für wenigstens eine der betrachteten Befehlstasten (Tn) der ersten Sequenz besteht.

4. Verfahren gemäß dem voranstehenden Anspruch, **dadurch gekennzeichnet, dass** das Drücken auf der Löschtaste nacheinander drei Mal wiederholt wird, bevor der Anpassungsschritt (110) des Reaktivitätsparameters wiederholt wird.

5. Verfahren gemäß irgendeinem der voranstehenden Ansprüche 2 bis 4, **dadurch gekennzeichnet, dass**
- der Aufbauschritt eines Nutzungsprofils die Operationen umfasst, bestehend im Detektieren:
- einer Sequenz, die in einem verlängerten Drücken auf einer betrachteten Befehlstaste (Tn) oder auf sukzessives Drücken auf der betrachteten Befehlstaste (Tn) besteht;
- einer Löschoperation durch das Anti-Rücksprungsystem (105) wenigstens eines Impulses, der durch das genannte verlängerte Drücken oder das genannte sukzessive Drücken auf der betrachteten Befehlstaste (Tn) hervorgerufen wird;
- eines neuen Drückens (302) auf der betrachteten Befehlstaste (Tn), was einen von dem Anti-Rücksprungsystem (105) nicht gelöschten Impuls hervorruft, wobei das genannte neue Drücken erfolgt, ohne dass ein anderes Drücken auf einer anderen Taste als der betrachteten Taste (Tn) seit der Löschoperation erfolgt ist;
- wobei der Anpassungsschritt des Reaktivitätsparameters dann im Abändern der Anti-Rücksprungdauer durch Verkürzen (304) für wenigstens die betrachtete Befehlstaste (Tn) besteht.

6. Verfahren gemäß dem voranstehenden Anspruch, **dadurch gekennzeichnet, dass** die Anzahl der von dem Anti-Rücksprungsystem (105) gelöschten Impulse höher als oder gleich drei ist.

7. Verfahren gemäß irgendeinem der Ansprüche 2 bis 6, **dadurch gekennzeichnet, dass** die Anpassung (110) des Reaktivitätsparameters in einer Abänderung der Anti-Rücksprungdauer für eine Vielzahl von Befehlstasten besteht, die vom Anti-Rücksprungsystem jeder betrachteten Befehlstaste (Tn) zugeordnet sind.

8. Verfahren gemäß irgendeinem der Ansprüche 2 bis 7, **dadurch gekennzeichnet, dass** die Abänderung der Anti-Rücksprungdauer in einer Abänderung nach Phasen besteht, wobei jede Phase zwischen zehn und fünfundzwanzig Millisekunden inbegriffen ist.

9. Verfahren gemäß irgendeinem der Ansprüche 2 bis 8, **dadurch gekennzeichnet, dass** die Anti-Rücksprungdauer, die auf wenigstens eine betrachtete Befehlstaste (Tn) anzuwenden ist, in Abhängigkeit von Messungen angepasst wird, die zwischen konsekutiven Drücken zwischen unterschiedlichen Befehlstasten aufgebaut werden, zu denen die genannte betrachtete Befehlstaste (Tn) gehört.

10. Verfahren gemäß Anspruch 1, **dadurch gekennzeichnet, dass**, da der Reaktivitätsparameter, der der Parameter ist, dessen Wert mit der Drückintensität auf einer betrachteten Befehlstaste (Tn) der benachbarten Kontrollausrüstung (101) korreliert ist, der genannte Wert eine Wiederholungszahl des der betrachteten Befehlstaste (Tn) zugeordneten Befehls angibt, die in der elektronischen Vorrichtung (100) anzuwenden ist, wenn die genannte Befehlstaste (Tn) als eingedrückt betrachtet wird.

11. Verfahren gemäß dem voranstehenden Anspruch, **dadurch gekennzeichnet, dass**:
- der Aufbauschritt eines Nutzungsprofils die Operation umfasst, bestehend aus dem Detektieren einer Sequenz, die aus einem Drücken auf einer betrachteten Befehlstaste (Tn) besteht, worauf unverzüglich ein Drücken auf einer Löschtaste des genannten Befehls folgt;
- wobei der Anpassungsschritt des Reaktivitätsparameters dann im Abändern durch deren Verkürzen für eine bestimmte Drückintensität auf der betrachteten Befehlstaste (Tn) der Anzahl von Wiederholungen des genannten Befehls besteht, der auf die elektronische Vorrichtung (100) anzuwenden ist, wenn die genannte betrachtete Befehlstaste (Tn) gedrückt wird.

12. Verfahren gemäß dem voranstehenden Anspruch, **dadurch gekennzeichnet, dass** das Drücken auf der Löschtaste nacheinander drei Mal wiederholt wird, bevor der Anpassungsschritt des Reaktivitätsparameters durchgeführt wird.

13. Verfahren gemäß irgendeinem der Ansprüche 10 bis 12, **dadurch gekennzeichnet, dass**:
- der Aufbauschritt einer Nutzungsprofils die Operation umfasst, bestehend im Detektieren einer Sequenz, die in einem verlängerten Drücken auf einer betrachteten Befehlstaste (Tn) besteht, gefolgt von einem erneuten Drücken auf der genannten, betrachteten Befehlstaste (Tn),
- wobei dann der Anpassungsschritt des Reaktivitätsparameters im Abändern durch deren Verlängern für eine bestimmte Drückintensität auf der betrachteten Befehlstaste (Tn) der Anzahl von Wiederholungen des genannten, in der elektronischen Vorrichtung (100) anzuwendenden Befehls besteht, wenn die genannte betrachtete Befehlstaste (Tn) gedrückt wird.

14. Elektronische Vorrichtung (100), die zum Umsetzen des Verfahrens gemäß irgendeinem der voranstehenden Ansprüche, zum Parametrieren der Reaktivität der genannten elektronischen Vorrichtung (100) geeignet ist, welche im Anschluss an den Empfang eines Befehls durch die elektronische Vorrichtung (100) festgestellt wird, der von einer benachbarten Kontrollausrüstung (101) ausgegeben wird, die eine Vielzahl von Befehlstasten umfasst, wobei die genannte Vorrichtung umfasst:
- Aufbaumittel eines Nutzungsprofils der benachbarten Kontrollausrüstung (101) durch eine Analyseoperation von Drückoperationen auf der Befehlstasten der genannten benachbarten Kontrollausrüstung (101;
- Anpassungsmittel eines Reaktivitätsparameters der elektronischen Vorrichtung (100) in Abhängigkeit von dem aufgebauten Nutzungsprofil.

## Claims

1. A method for parameterising responsivity of an electronic device (100) observed as a result of receiving, by the electronic device (100), a command emitted from a neighbouring piece of control equipment (101) including a plurality of command keys, said method including the different steps of:
- establishing a use profile of the neighbouring piece of control equipment (101) by an operation (109) of analysing depress operations on the command keys of said neighbouring piece of control equipment (101);
- adapting (110) a responsivity parameter of the electronic device (100) depending on the use profile established;
the method being **characterised in that** the responsivity parameter is a debouncing duration, or a parameter whose value is correlated with the depress intensity on a command key (Tn) considered of the neighbouring piece of control equipment (101).

2. The method according to the preceding claim, **characterised in that** the debouncing duration is associated with a debouncing system (105), said debouncing duration being assigned to a set of keys from the plurality of command keys of the neighbouring piece of control equipment (101).

3. The method according to the preceding claim, **characterised in that**:
- the step of establishing a use profile includes the operation of detecting (202) a sequence consisting in depressing a command key (Tn) considered immediately followed by depressing for cancelling said command;
- the step of adapting (110) the responsivity parameter then consisting in modifying, by increasing (205) it, the debouncing duration for at least one of the command keys (Tn) considered of the first sequence.

4. The method according to the preceding claim, **characterised in that** depressing the cancellation key is repeated three times consecutively before performing the step of adapting (110) the responsivity parameter.

5. The method according to any of claims 2 to 4, **characterised in that**:
- the step of establishing a use profile includes the operations of detecting:
- a sequence consisting in depressing in a prolonged manner a command key (Tn) considered or successively depressing the command key (Tn) considered;
- an operation of deleting by the debouncing system (105), at least one pulse caused by said depressing in a prolonged manner or by said successively depressing the command keys (Tn) considered;
- newly depressing (302) the command key (Tn) considered causing a non-deleting pulse by the debouncing system (105), said newly depressing occurring without any depressing another key than the key (Tn) considered occurring from the deletion operation;
- the step of adapting the responsivity parameter then consisting in modifying, by decreasing (304) it, the debouncing duration for at least the command key (Tn) considered.

6. The method according to the preceding claim, **characterised in that** the number of pulses deleted by the debouncing system (105) is greater than or equal to three.

7. The method according to any of claims 2 to 6, **characterised in that** adapting (110) the responsivity parameter consists in modifying the debouncing duration for a plurality of associated command keys by a debouncing system at each command key (Tn) considered.

8. The method according to any of claims 2 to 7, **characterised in that** modifying the debouncing duration consists in a modification in stages, each stage being of between ten and twenty five milliseconds.

9. The method according to any of claims 2 to 8, **characterised in that** the duration of debouncing to be applied to at least one command key (Tn) considered is adapted depending on measurements established between consecutive depressions between different command keys to which said command key (Tn) considered belongs.

10. The method according to claim 1, **characterised in that**, the responsivity parameter being the parameter whose value is correlated with the depress intensity on a command key (Tn) considered of the neighbouring piece of control equipment (101), said value gives a number of repetitions of the command associated with a command key (Tn) considered to be applied in the electronic device (100) when said command key (Tn) considered is depressed.

11. The method according to the preceding claim, **characterised in that**
- the step of establishing a use profile includes the operation of detecting a sequence consisting in depressing a command key (Tn) considered immediately followed by depressing a key for cancelling said command;
- the step of adapting the responsivity parameter then consisting in modifying, by decreasing it, for a given depress intensity on the command key (Tn) considered, the number of repetitions of said command to be applied in the electronic device (100) when said command key (Tn) considered is depressed.

12. The method according to the preceding claim, **characterised in that** depressing the cancellation key is repeated three times consecutively before performing the step of adapting the responsivity parameter.

13. The method according to any of claims 10 to 12, **characterised in that**:
- the step of establishing a use profile includes the operation of detecting a sequence consisting in depressing in a prolonged manner a command key (Tn) considered, followed by newly depressing said command key (Tn) considered;
- the step of adapting the responsivity parameter then consisting in modifying, by increasing it, for a given depress intensity on the command key (Tn) considered, the number of repetitions of said command to be applied in the electronic device (100) when said command key (Tn) considered is depressed.

14. An electronic device (100) adapted for implementing the method according to any of the preceding claims, for parameterising responsivity of said electronic device (100) observed as a result receiving, by the electronic device (100), a command emitted from a neighbouring piece of control equipment (101) including a plurality of command keys, said device including
- means for establishing a use profile of the neighbouring piece of control equipment (101) by an operation of analysing depress operations on the command keys of said neighbouring piece of control equipment (101);
- means for adapting a responsivity parameter of the electronic device (100) depending on the use profile established.
